# EUROPEAN PATENT APPLICATION

(11) **EP 3 396 491 A2**
(43) Date of publication of application: **31.10.2018**
(21) Application number: 16879349.5
(22) Date of filing: 22.12.2016
(51) Int. Cl.: G06F 3/00, H02J 7/02, G09F 9/30

(54) **SELF-POWER SUPPLY TYPE ELEMENT AND FLEXIBLE DEVICE INCLUDING SAME**

(30) Priority: 23.12.2015 KR 20150185433
(71) Applicant: Rekrix Co., Ltd., Geumcheon-gu, Seoul 08500 (KR)
(72) Inventor: RYOU, Byoung Hoon, Seoul 06584 (KR); KONG, Jae Kyung, Seoul 06509 (KR)
(74) Representative: Isarpatent
(86) International application number: PCT/KR2016/015072
(87) International publication number: WO 2017/111482

(57) **Abstract**

Disclosed are a self-power supply type element and a flexible device including the same. An embodiment of the present invention provides a self-power supply type element comprising: an element for receiving an electric current and performing a unique function thereof; and an ultra-thin film type micro-battery connected to the element to apply an electric current thereto.

## Description

### [Technical Field]

The present invention relates to a self-power supply type element and a flexible device including the same.

### [Background Art]

Electrochemical energy sources based on solid-state electrolytes are well known.

Such solid-state batteries may efficiently convert chemical energy into electrical energy and may be used as power sources for portable electronic devices. The batteries may be used, for example, for supplying small quantities of electrical energy to microelectronic modules, particularly integrated circuits (ICs).

However, known batteries are quite rigid, and the applicability of the known batteries is quite limited.

Therefore, the necessity for elastic and flexible drive sources to drive not only rigid electronic devices such as implantable devices and home appliances but also flexible electronic devices such as textile electronics in an effective manner is increasing.

### [Disclosure]

### [Technical Problem]

The present invention is directed to providing a self-power supply type element with reduced energy loss and secured reliability in comparison to the case in which all elements are driven by an external energy source by manufacturing an element along with an ultra-thin film type micro-battery for supplying power to the element.

Further, the present invention is directed to providing a flexible device formed to be folded or rolled by including the self-power supply type element described above.

### [Technical Solution]

One aspect of the present invention provides a self-power supply type element including an element configured to receive a current and perform a unique function thereof, and an ultra-thin film type micro-battery connected to the element to apply a current to the element.

The ultra-thin film type micro-battery may be integrally fixed to the element.

The ultra-thin film type micro-battery may be provided to be spaced apart from the element, and the self-power supply type element may further include a connection member configured to electrically connect the element to the ultra-thin film type micro-battery.

The self-power supply type element may further include a wireless charging module connected to the ultra-thin film type micro-battery to receive power from a surrounding radio wave or magnetic field and charge the ultra-thin film type micro-battery.

The wireless charging module may be integrally fixed to the ultra-thin film type micro-battery.

Another aspect of the present invention provides a flexible device including a self-power supply type element comprising a substrate, a plurality of elements mounted on the substrate, a plurality of ultra-thin film type micro-batteries connected to each of the plurality of elements to apply a current to each of the plurality of elements, and an auxiliary current supply battery connected to each of the plurality of elements to apply a current to each of the plurality of elements.

The ultra-thin film type micro-batteries may apply a current to the elements so that residual voltages of the elements become less than an operating voltage, and the auxiliary current supply battery may apply a current to each of the elements to drive the elements so that the residual voltages of the elements become the operating voltage or higher.

The flexible device including the self-power supply type element may further include a controller configured to level the residual voltages of the plurality of elements uniformly.

The ultra-thin film type micro-battery may be integrally fixed to the element.

The ultra-thin film type micro-battery may be provided to be spaced apart from the element, and the flexible device including the self-power supply type element may further include a connection member configured to electrically connect the element to the ultra-thin film type micro-battery.

The flexible device including the self-power supply type element may further include a flexible display unit formed on one surface of the substrate, wherein the substrate is formed of a flexible material so as to be folded or rolled along with the flexible display unit.

Still another aspect of the present invention provides a flexible device including a self-power supply type element comprising a substrate, a plurality of elements mounted on the substrate, a plurality of ultra-thin film type micro-batteries connected to each of the plurality of elements to apply a current to each of the elements, and a wireless charging module connected to each of the plurality of ultra-thin film type micro-batteries to receive power from a surrounding radio wave or magnetic field and charge the ultra-thin film type micro-batteries.

A plurality of wireless charging modules may be formed and may be connected to each of the ultra-thin film type micro-batteries.

The wireless charging modules may be integrally fixed to each of the ultra-thin film type micro-batteries.

The flexible device including the self-power supply type element may further include a sub wireless charging module of a flexible material formed on one surface of the substrate, wherein the sub wireless charging module may be connected to each of the ultra-thin film type micro-batteries to charge the ultra-thin film type micro-batteries.

The flexible device including the self-power supply type element may further include a controller configured to level residual voltages of the plurality of elements uniformly.

The ultra-thin film type micro-battery may be integrally fixed to the element.

The ultra-thin film type micro-battery may be provided to be spaced apart from the element, and the flexible device including the self-power supply type element may further include a connection member configured to electrically connect the element to the ultra-thin film type micro-battery.

The flexible device including the self-power supply type element may further include a flexible display unit formed on one surface of the substrate, wherein the substrate may be formed of a flexible material so as to be folded or rolled along with the flexible display unit.

### [Advantageous Effects]

According to an embodiment of the present invention, a self-power supply type element with reduced energy loss and secured reliability in comparison to the case in which all of elements are driven by an external energy source can be provided by manufacturing an element along with an ultra-thin film type micro-battery for supplying power to the element.

Further, according to another embodiment of the present invention, a flexible device formed to be folded or rolled by including the self-power supply type element described above can be provided.

### [Description of Drawings]

FIG. 1 is a view showing a first example of a self-power supply type element according to the present invention.
FIG. 2 is a view showing a second example of the self-power supply type element according to the present invention.
FIG. 3 is a view showing a third example of the self-power supply type element according to the present invention.
FIG. 4 is a view showing a fourth example of the self-power supply type element according to the present invention.
FIG. 5 is a view showing a first example of a flexible device according to the present invention.
FIG. 6 is a view showing a second example of the flexible device according to the present invention.
FIG. 7 is a view showing a third example of the flexible device according to the present invention.
FIG. 8 is a view showing a fourth example of the flexible device according to the present invention.
FIG. 9 is a view showing a fifth example of the flexible device according to the present invention.
FIG. 10 is a view showing a sixth example of the flexible device according to the present invention.
FIG. 11 is a view showing a seventh example of the flexible device according to the present invention.

### [Modes of the Invention]

As embodiments allows for various changes and numerous embodiments, exemplary embodiments will be illustrated in the drawings and described in detail in the written description. However, this is not intended to limit embodiments to particular modes of practice, and it is to be appreciated that all changes, equivalents, and substitutes that do not depart from the spirit and technical scope of embodiments are encompassed in embodiments. In the description of embodiments certain detailed explanations of the related art are omitted when it is deemed that they may unnecessarily obscure the essence of the present invention.

The terminology used herein is for the purpose of describing particular embodiments only and is not intended to be limiting of the invention. As used herein, the singular forms "a" and "an" are intended to include the plural forms as well, unless the context clearly indicates otherwise. It will be further understood that the terms "comprise," "comprising," "include," and/or "including," when used herein, specify the presence of stated features, integers, steps, operations, components, parts, and/or combinations thereof, but do not preclude the presence or addition of one or more other features, integers, steps, operations, components, parts, and/or combinations thereof.

While such terms as "first," "second," etc., may be used to describe various components, such components must not be limited to the above terms. The above terms are used only to distinguish one component from another.

In an embodiment of the present invention, a self-power supply type element including an element which receives a current and performs a unique function thereof and an ultra-thin film type micro-battery which is connected to the element to apply a current to the element is provided.

Hereinafter, the self-power supply type element according to the embodiment of the present invention will be described with reference to the drawings.

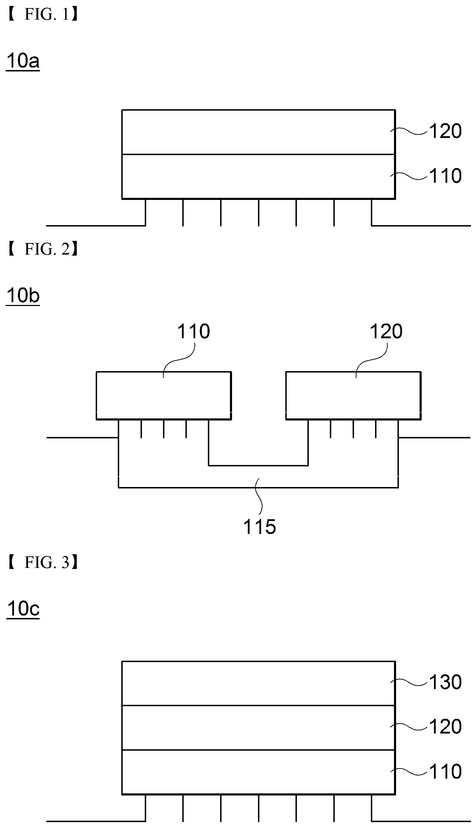

FIG. 1 is a view showing a first example of the self-power supply type element according to the present invention.

Referring to FIG. 1, a self-power supply type element 10a according to the present invention may include an element 110 and an ultra-thin film type micro-battery 120 integrally fixed to the element 110.

Here, the element 110 may include various electronic parts constituting a conventional electronic device.

The ultra-thin film type micro-battery 120 may be an all-solid-state secondary battery based on a solid-state electrolyte. For example, a silicon battery may be used as the ultra-thin film type micro-battery 120, but the present invention is not limited thereto.

The ultra-thin film type micro-battery 120 is stacked on the element 110 while being connected to the element 110 to supply power required for the element 110 to perform a unique function thereof.

FIG. 2 is a view showing a second example of the self-power supply type element according to the present invention.

Referring to FIG. 2, a self-power supply type element 10b according to the present invention may include an element 110, an ultra-thin film type micro-battery 120 provided to be spaced a predetermined distance from the element 110, and a connection member 115 configured to electrically connect the element 110 to the ultra-thin film type micro-battery 120.

Here, since the element 110 and the ultra-thin film type micro-battery 120 are the same as the above-described configuration, redundant descriptions will be omitted.

The connection member 115 may be designed and modified in various forms so as to electrically connect the element 110 to the ultra-thin film type micro-battery 120.

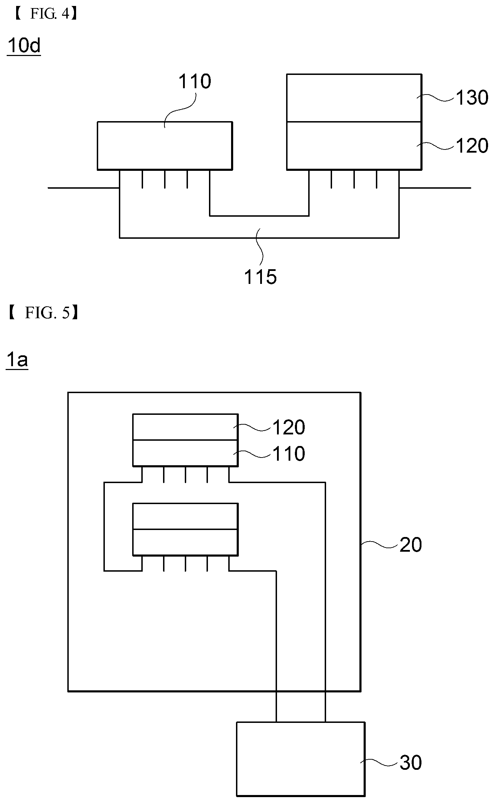

FIG. 3 is a view showing a third example of the self-power supply type element according to the present invention. FIG. 4 is a view showing a fourth example of the self-power supply type element according to the present invention.

Referring to FIGS. 3 and 4, each of self-power supply type elements 10c and 10d according to the present invention may include an element 110, an ultra-thin film type micro-battery 120, and a wireless charging module 130.

Here, the element 110 and the ultra-thin film type micro-battery 120 may be integrally fixed as shown in FIG. 3, or may be provided to be spaced a predetermined distance from each other as shown in FIG. 4.

In this case, the wireless charging module 130 is connected to the ultra-thin film type micro-battery 120 to receive power from a surrounding radio wave or magnetic field and to charge the ultra-thin film type micro-battery 120.

In FIGS. 3 and 4, the wireless charging module 130 is shown as being integrally fixed onto the ultra-thin film type micro-battery 120, but the present invention is not limited thereto. For example, the wireless charging module 130 may be provided to be spaced a predetermined distance from the ultra-thin film type micro-battery 120, or may be stacked on the element 110 while being connected to the ultra-thin film type micro-battery 120.

In another embodiment of the present invention, a flexible device including a self-power supply type element is provided comprising a substrate, a plurality of elements mounted on the substrate, a plurality of ultra-thin film type micro-batteries connected to each of the plurality of elements to apply a current to each of the plurality of elements, and an auxiliary current supply battery connected to each of the plurality of elements to apply a current to each of the plurality of elements.

Hereinafter, the flexible device according to another embodiment of the present invention will be described with reference to the drawings.

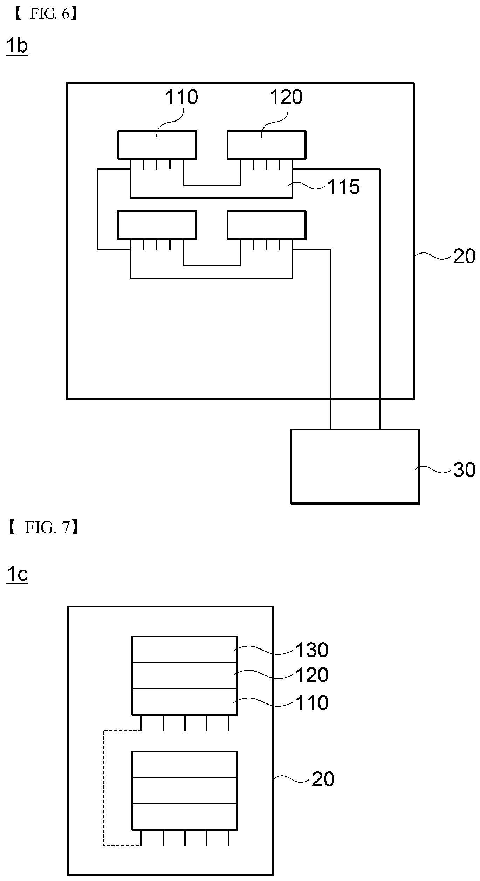

FIG. 5 is a view showing a first example of the flexible device according to the present invention. FIG. 6 is a view showing a second example of the flexible device according to the present invention.

Referring to FIGS. 5 and 6, each of flexible devices 1a and 1b according to the present invention may include a substrate 20, elements 110, ultra-thin film type micro-batteries 120, and an auxiliary current supply battery 30.

First, the plurality of elements 110 may be mounted on the above-described substrate 20 and may include various electronic parts constituting a conventional electronic device.

The ultra-thin film type micro-batteries 120 are configured to apply a current to the elements 110 while being connected to each of the plurality of elements 110. The ultra-thin film type micro-battery 120 may be an all-solid-state secondary battery based on a solid-state electrolyte. For example, a silicon battery may be used as the ultra-thin film type micro-battery 120, but the present invention is not limited thereto.

Here, the element 110 and the ultra-thin film type micro-battery 120 may be integrally fixed as shown in FIG. 5, or may be provided to be spaced a predetermined distance from each other as shown in FIG. 6.

The auxiliary current supply battery 30 is configured to apply a current to each of the plurality of elements 110 while being connected to each of the plurality of elements 110.

In this case, the ultra-thin film type micro-batteries 120 drive the elements 110 by applying a current to the elements 110 until residual voltages remaining in the elements 110 become less than an operating voltage. When the residual voltages become less than the operating voltage, the auxiliary current supply battery 30 drives the elements 110 by applying a current to the elements 110 so that the residual voltages of the elements 110 becomes the operating voltage or higher.

In this case, although not shown in the drawings, each of the flexible devices according to the present invention preferably includes a controller (not shown) to level the residual voltages of the plurality of elements 110 uniformly.

In still another embodiment of the present invention, a flexible device including a self-power supply type element is provided comprising a substrate, a plurality of elements mounted on the substrate, a plurality of ultra-thin film type micro-batteries connected to each of the plurality of elements to apply a current to each of the plurality of elements, and a wireless charging module which is connected to each of the plurality of ultra-thin film type micro-batteries to receive power from a surrounding radio wave or magnetic field and charge the ultra-thin film type micro-batteries.

Hereinafter, the flexible device according to still another embodiment of the present invention will be described with reference to the drawings.

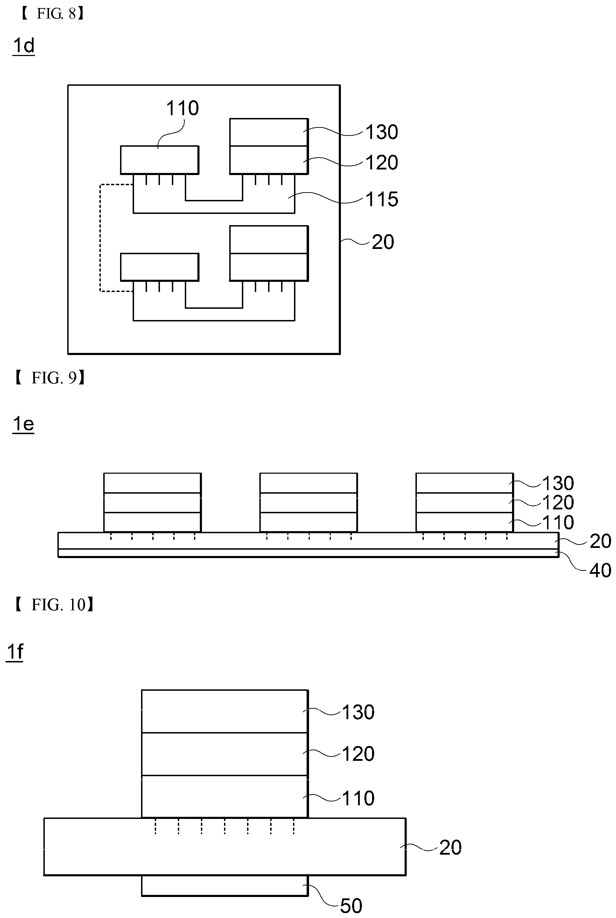

FIG. 7 is a view showing a third example of the flexible device according to the present invention. FIG. 8 is a view showing a fourth example of the flexible device according to the present invention.

Referring to FIGS. 7 and 8, each of flexible devices 1c and 1d according to the present invention may include a substrate 20, elements 110, ultra-thin film type micro-batteries 120, and wireless charging modules 130.

Here, the element 110 and the ultra-thin film type micro-battery 120 may be integrally fixed as shown in FIG. 7, or may be provided to be spaced a predetermined distance from each other as shown in FIG. 8.

In this case, the plurality of wireless charging modules 130 are connected to each of the ultra-thin film type micro-batteries 120 to supply power from a surrounding radio wave or magnetic field and to charge the ultra-thin film type micro-batteries 120.

In FIGS. 7 and 8, the wireless charging module 130 is shown as being integrally fixed onto the ultra-thin film type micro-battery 120, but the present invention is not limited thereto. For example, the wireless charging module 130 may be provided to be spaced a predetermined distance from the ultra-thin film type micro-battery 120, or may be stacked on the element 110 while being connected to the ultra-thin film type micro-battery 120.

FIG. 9 is a view showing a fifth example of the flexible device according to the present invention.

Referring to FIG. 9, a flexible device according to the present invention may further include a flexible display unit 40 formed on one surface of the substrate 20.

In this case, the substrate 20 may be formed of a flexible material so as to be folded or rolled along with the flexible display unit 40.

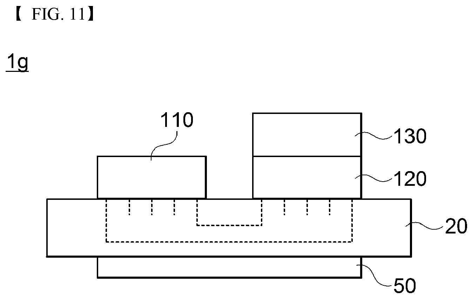

FIG. 10 is a view showing a sixth example of the flexible device according to the present invention. FIG. 11 is a view showing a seventh example of the flexible device according to the present invention.

Referring to FIGS. 10 and 11, each of flexible devices according to the present invention may further include a sub wireless charging module 50 of a flexible material formed on one surface of the substrate 20 in addition to the wireless charging module 130 described above.

The sub wireless charging module 50 is connected to each of the ultra-thin film type micro-batteries 120 to charge the ultra-thin film type micro-batteries 120.

In FIGS. 10 and 11, one sub wireless charging module 50 is shown as being additionally provided on a rear surface of the substrate 20. However, various numbers of sub wireless charging modules 50 may be designed to be provided at various positions.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A self-power supply type element comprising:
an element configured to receive a current and perform a unique function thereof; and
an ultra-thin film type micro-battery connected to the element to apply a current to the element.

2. The self-power supply type element of claim 1, wherein the ultra-thin film type micro-battery is integrally fixed to the element.

3. The self-power supply type element of claim 1, wherein:
the ultra-thin film type micro-battery is provided to be spaced apart from the element; and
the self-power supply type element further includes a connection member configured to electrically connect the element to the ultra-thin film type micro-battery.

4. The self-power supply type element of claim 1, further comprising a wireless charging module connected to the ultra-thin film type micro-battery to receive power from a surrounding radio wave or magnetic field and charge the ultra-thin film type micro-battery.

5. The self-power supply type element of claim 4, wherein the wireless charging module is integrally fixed to the ultra-thin film type micro-battery.

6. A flexible device including a self-power supply type element comprising:
a substrate;
a plurality of elements mounted on the substrate;
a plurality of ultra-thin film type micro-batteries connected to each of the plurality of elements to apply a current to each of the plurality of elements; and
an auxiliary current supply battery connected to each of the plurality of elements to apply a current to each of the plurality of elements.

7. The flexible device including the self-power supply type element of claim 6, wherein:
the ultra-thin film type micro-batteries apply a current to the elements so that residual voltages of the elements become less than an operating voltage; and
the auxiliary current supply battery applies a current to each of the elements to drive the elements so that the residual voltages of the elements become the operating voltage or higher.

8. The flexible device including the self-power supply type element of claim 6, further comprising a controller configured to level residual voltages of the plurality of elements uniformly.

9. The flexible device including the self-power supply type element of claim 6, wherein the ultra-thin film type micro-battery is integrally fixed to the element.

10. The flexible device including the self-power supply type element of claim 6, wherein:
the ultra-thin film type micro-battery is provided to be spaced apart from the element; and
the flexible device including the self-power supply type element further includes a connection member configured to electrically connect the element to the ultra-thin film type micro-battery.

11. The flexible device including the self-power supply type element of claim 6, further comprising a flexible display unit formed on one surface of the substrate,
wherein the substrate is formed of a flexible material so as to be folded or rolled along with the flexible display unit.

12. A flexible device including a self-power supply type element comprising:
a substrate;
a plurality of elements mounted on the substrate;
a plurality of ultra-thin film type micro-batteries connected to each of the plurality of elements to apply a current to each of the elements; and
a wireless charging module connected to each of the plurality of ultra-thin film type micro-batteries to receive power from a surrounding radio wave or magnetic field and charge the ultra-thin film type micro-batteries.

13. The flexible device including the self-power supply type element of claim 12, wherein a plurality of wireless charging modules are formed and are connected to each of the ultra-thin film type micro-batteries.

14. The flexible device including the self-power supply type element of claim 13, wherein the wireless charging modules are integrally fixed to each of the ultra-thin film type micro-batteries.

15. The flexible device including the self-power supply type element of claim 13, further comprising a sub wireless charging module of a flexible material formed on one surface of the substrate,
wherein the sub wireless charging module is connected to each of the ultra-thin film type micro-batteries to charge the ultra-thin film type micro-batteries.

16. The flexible device including the self-power supply type element of claim 12, further comprising a controller configured to level residual voltages of the plurality of elements uniformly.

17. The flexible device including the self-power supply type element of claim 12, wherein the ultra-thin film type micro-battery is integrally fixed to the element.

18. The flexible device including the self-power supply type element of claim 12, wherein:
the ultra-thin film type micro-battery is provided to be spaced apart from the element; and
the flexible device including the self-power supply type element further includes a connection member configured to electrically connect the element to the ultra-thin film type micro-battery.

19. The flexible device including the self-power supply type element of claim 12, further comprising a flexible display unit formed on one surface of the substrate,
wherein the substrate is formed of a flexible material so as to be folded or rolled along with the flexible display unit.
